# EUROPEAN PATENT APPLICATION

(11) **EP 1 437 530 A1**
(43) Date of publication of application: **14.07.2004**
(21) Application number: 02762981.5
(22) Date of filing: 03.09.2002
(51) Int. Cl.: F16H 37/12, F16H 21/10, B25J 17/00

(54) **ROTATION TRANSMISSION DEVICE**

(30) Priority: 05.09.2001 JP 2001268930
(71) Applicant: Kabushiki Kaisha F.F.C., Tokyo 121-0836 (JP)
(72) Inventor: KOSEKI, Mitsuhiro, c/o Kabushiki Kaisha F.F.C., Tokyo 121-0836 (JP)
(74) Representative: Sajda, Wolf E., Dipl.-Phys.
(86) International application number: PCT/JP2002/008938
(87) International publication number: WO 2003/023257

(57) **Abstract**

In a rotation transmission device, a first shaft is provided in a first link member and a second shaft is fitted to a second link member. The first and second link members are connected to each other through a connection guide device. The connection guide device has a connection member, a first guide gear fixed to the first link member, and a second guide gear fixed to the second link member. A first transmission gear having the same diameter as that of the first guide gear is rotatable with respect to the first shaft with the first shaft as a center. A second transmission gear having the same diameter as that of the second guide gear is rotatable with respect to the second shaft with the second shaft as a center. The first and second transmission gears mesh with each other.

## Description

### Technical Field

The present invention relates to a rotation transmission device that performs transmission of rotation while eliminating interference due to rotary joints.

### Background Art

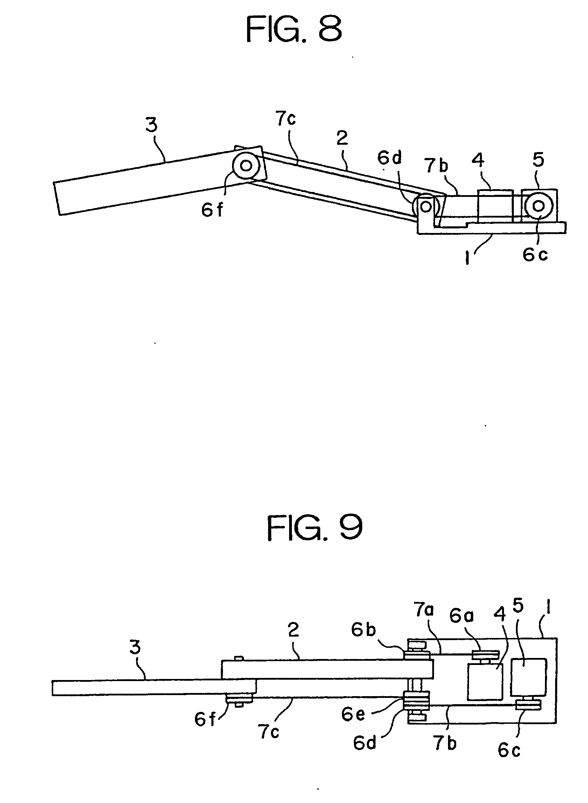

Fig. 8 is a side view that shows an example of a conventional articulated arm device, and Fig. 9 is a plan view of the device of Fig. 8. In the figures, a proximal end portion of a first arm 2 is pivotably connected to a base 1. A proximal end portion of a second arm 3 is pivotably connected to a distal end portion of the first arm 2.

A first motor 4 that causes the first arm 2 to pivot, and a second motor 5 that causes the second arm 3 to pivot are fixed on the base 1. A driving force of the first motor 4 is transmitted to the first arm 2 through a pulley 6a, a belt 7a, and a pulley 6b. A driving force of the second motor 5 is transmitted to the second arm 3 through a pulley 6c, a belt 7b, a pulley 6d, a pulley 6e, a belt 7c, and a pulley 6f.

In this type of articulated arm device, rotation of the first arm 2 affects (interferes with) operation of the second arm 3 on a pivoting shaft of the first arm 2. Accordingly, the second arm 3 pivots with respect to the first arm 2, even if only the first motor 4 is driven. It is therefore necessary to drive the first motor 4 and the second motor 5 at the same time, even for cases where it is desired to drive only the first arm 2.

Further, since there are variations in the characteristics of the motors 4 and 5, completely independent operation cannot be achieved when driving each of the rotary joints. Thus, precise operation of each of the rotary joints is difficult. In addition, a control program that takes into account the interference described above is necessary for cases of performing compound operation, and control is difficult. On the other hand, mechanisms for eliminating the type of interference described above become more complex and larger in size as the number of rotary joints increases.

### Disclosure of the Invention

The present invention has been made in order to resolve problems like those described above. An object of the present invention is to obtain a rotation transmission device that is capable of transmitting rotation while eliminating interference caused by rotary joints.

To this end, according to one aspect of the present invention, there is provided a rotation transmission device provided in a link assembly having a first link member and a second link member that are mutually rotatably connected, the rotation transmission device transmitting rotation of a first rotating member provided in the first link member to a second rotating member provided in the second link member, the rotation transmission device comprising: a first shaft provided in the first link member; a second shaft provided in the first link member and extending in parallel with the first shaft; a connecting guide device having: at least one connecting member which is connected between the first shaft and the second shaft and is rockable with respect to the first link member and the second link member with the first shaft and the second shaft as centers, the connecting member maintaining a spacing between the first shaft and the second shaft; at least one first guide gear which is disposed coaxially with the first shaft and fixed to the first link member; and at least one second guide gear disposed coaxially with the second shaft, the second guide gear being fixed to the second link member and meshing with the first guide gear; a first transmission gear which is freely rotatable with respect to the first shaft, with the first shaft as a center, and has the same diameter as that of the first guide gear; a second transmission gear which is freely rotatable with respect to the second shaft, with the second shaft as a center, has the same diameter as that of the second guide gear, and meshes with the first transmission gear; a first transmitting means that is provided in the first link member, for transmitting the rotation of the first rotating member to the first transmission gear; and a second transmitting means which is provided in the second linkmember, for transmitting rotation of the second transmission gear to the second rotating member.

According to another aspect of the present invention, there is provided a rotation transmission device provided in a link assembly having n link members (where n is a natural number equal to or greater than 3) that are mutually rotatably connected, the rotation transmission device transmitting rotation of a first rotating member to a second rotating member, the first rotating member being provided in a first link member that is positioned in one end portion of the link assembly, the second rotating member being provided in an n-th link member that is positioned in the other end portion of the link assembly, the rotation transmission device comprising: (n-1) first shafts, each of which is provided in each of the link members excluding the n-th link member; (n-1) second shafts, each of which is provided in each of the link members excluding the first link member so as to be adjacent to each of the first shafts, the second shafts extending in parallel with the adjacent first shafts; (n-1) connecting guide devices, each of the connecting guide devices being disposed between mutually adjacent link members and having: at least one connecting member which is connected between each of the first shafts and each of the second shafts that are mutually adjacent and is rockable with respect to each link member with each link member as a center, the connecting member maintaining a spacing between each first shaft and each second shaft that are mutually adjacent; at least one first guide gear which is disposed coaxially with each first shaft and is fixed to each link member; and at least one second guide gear disposed coaxially with each second shaft, the second guide gear being fixed to each link member and meshing with each first guide gear; (n-1) first transmission gears which are freely rotatable with respect to the first shafts, with the first shafts as centers, and have the same diameter as that of the first guide gear arranged coaxially therewith; (n-1) second transmission gears which are freely rotatable with respect to the second shafts, with the second shafts as centers, have the same diameter as that of the second guide gear arranged coaxially therewith, and mesh with the first transmission gears; a first transmitting means which is provided in the first link member, for transmitting rotation of the first rotating member to the first transmission gear of the first link member; a second transmitting means which is provided in the n-th link member, for transmitting rotation of the second transmission gear of the n-th link member to the second rotating member; and (n-2) third transmitting means which are provided in each of the link members excluding the first link member and the n-th link member, for transmitting rotation of the second transmission gears to the first transmission gears provided in the same link members.

### Brief Description of the Drawings

In the accompanying drawings:
Fig. 1 is a side view that shows a rotation transmission device according to Embodiment 1 of the present invention;
Fig. 2 is a plan view that shows the rotation transmission device of Fig. 1;
Fig. 3 is an explanatory diagram that shows a relationship between a first transmission gear and a second transmission gear of Fig. 2;
Fig. 4 is an explanatory diagram that shows a state in which a second shaft of Fig. 3 has displaced with respect to a first shaft;
Fig. 5 is a plan view that shows a rotation transmission device according to Embodiment 2 of the present invention;
Fig. 6 is a side view that shows a main portion of a rotation transmission device according to Embodiment 3 of the present invention;
Fig. 7 is a side view that shows a rotation transmission device according to Embodiment 4 of the present invention;
Fig. 8 is a side view that shows an example of a conventional articulated arm device; and
Fig. 9 is a plan view that shows the device of Fig. 8.

### Best Mode for carrying out the Invention

Preferred embodiments of the present invention are explained below while referring to the drawings.

### Embodiment 1

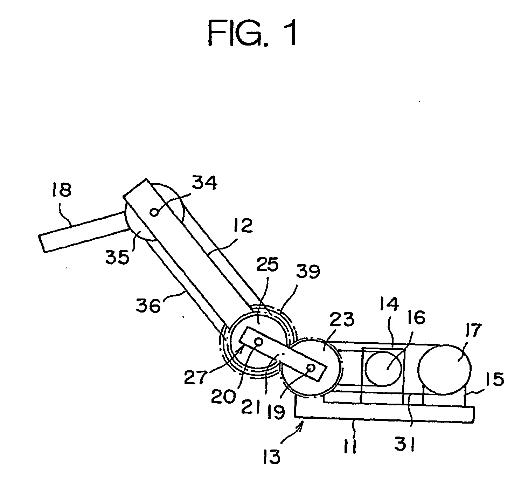

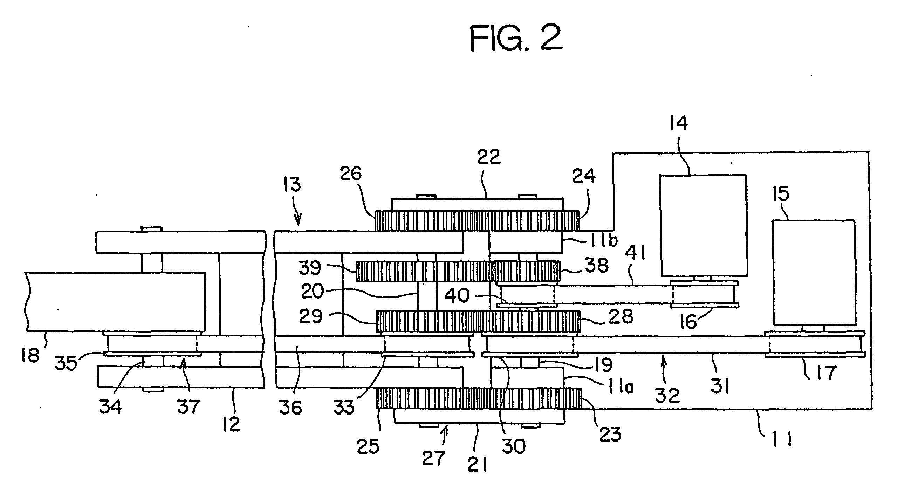

Fig. 1 is a side view that shows a rotation transmission device according to Embodiment 1 of the present invention, and Fig. 2 is a plan view that shows the rotation transmission device of Fig. 1.

In the figures, a boom 12 is pivotably connected as a second linkmember to a base 11, which is a first linkmember. A link assembly 13 has the base 11 and the boom 12. A boom motor 14 and an arm motor 15 are mounted on the base 11.

A first boom pulley 16 is rotated by the boom motor 14. A first arm pulley 17 as a first rotating member is rotated by the arm motor 15. An arm 18 is pivotably connected to a distal end portion of the boom 12. Rotation of the first arm pulley 17 is transmitted to the arm 18 by the rotation transmission device.

A pair of mutually opposing shaft supports 11a and 11b are provided to the base 11. A first shaft 19 is fixed to the shaft supports 11a and 11b. A second shaft 20 that extends in parallel with respect to the first shaft 19 is fixed to a proximal end portion of the boom 12. A pair of connecting members 21 and 22 that maintain a gap between the first shaft 19 and the second shaft 20 are connected between both end portions of the first shaft 19 and the second shaft 20. The connecting members 21 and 22 are rockable with respect to the base 11 and the boom 12, with the first shaft 19 and the second shaft 20 as centers.

A pair of first guide gears 23 and 24 are disposed coaxially with the first shaft 19, and are fixed to the shaft supports 11a and 11b, respectively, of the base 11. A pair of second guide gears 25 and 26 that mesh with the first guide gears 23 and 24 are disposed coaxially with the second shaft 20, and are fixed to both width direction sides of a proximal end portion of the boom 12. A connection guide device 27 has the pair of connecting members 21 and 22, the pair of first guide gears 23 and 24, and the pair of second guide gears 25 and 26.

The boom 12 is connected to the base 11 by the connecting guide device 27 as described above. Further, in Embodiment 1, the first guide gears 23 and 24, and the second guide gears 25 and 26 have the same diameter.

A first transmission gear 28, which is freely rotatable about the first shaft 19 with the first shaft 19 as a center, is provided to the first shaft 19. The first transmission gear 28 has the same diameter as that of the first guide gears 23 and 24. A second transmission gear 29, which is freely rotatable with respect to the second shaft 20 with the second shaft 20 as a center, is provided to the second shaft 20. The second transmission gear 29 has the same diameter as that of the second guide gears 25 and 26, and meshes with the first transmission gear 28.

A second arm pulley 30 that rotates integrally with the first transmission gear 28 is fixed to the first transmission gear 28, with the first shaft 19 as a center. A loop-shaped first arm belt 31 is wound between the first arm pulley 17 and the second arm pulley 30. A first transmitting means 32 that transmits rotation of the first arm pulley 17 to the first transmission gear 28 comprises the second arm pulley 30 and the first arm belt 31.

A third arm pulley 33 that rotates integrally with the second transmission gear 29 is fixed to the second transmission gear 29, with the second shaft 20 as a center. A third shaft 34 that extends in parallel with the first shaft 19 and the second shaft 20 is fixed to the distal end portion of the boom 12. The arm 18 pivots with the third shaft 34 as a center.

A fourth arm pulley 35 that pivots integrally with the arm 18 is fixed to the arm 18, with the third shaft 34 as a center. A loop-shaped second arm belt 36 is wound between the third arm pulley 33 and the fourth arm pulley 35. A second transmitting means 37 for transmitting rotation of the second transmission gear 29 to the arm 18 has the third arm pulley 33, the fourth arm pulley 35, and the second arm belt 36.

The rotation transmission device of Embodiment 1 comprises the connecting guide device 27, the first transmission gear 28, the second transmission gear 29, the first transmitting means 32, and the second transmitting means 37.

The drive mechanism of the boom 12 is explained next. A first boom gear 38 that is freely rotatable with respect to the first shaft 19 is provided on the first shaft 19, with the first shaft 19 as a center. A second boom gear 39 that rotates integrally with the boom 12 and the second shaft 20 is provided on the second shaft 20, with the second shaft 20 as a center.

The second boom gear 39 meshes with the first boom gear 38. Further, the diameter of the second boom gear 39 is equal to twice the diameter of the first boom gear 38.

A second boom pulley 40, which rotates integrally with the boom gear 38 with the first shaft 19 as a center, is fixed to the first boom 38. A loop-shaped first arm belt 41 is wound between the first boom pulley 16 and the second boom pulley 40. Rotation of the first boom pulley 16 is transmitted to the boom 12 through the first boom belt 41, the second boom pulley 40, the first boom gear 38, the second boom gear 39, and the second shaft 19.

Operation is explained next. First, for cases where the arm is made to pivot with respect to the boom 12, the arm motor 15 rotates the first arm pulley 17. Rotation of the first arm pulley 17 is transmitted to the first arm belt 31, the second arm pulley 30, the first transmission gear 28, the second transmission gear 29, the third arm pulley 33, the second arm pulley 36, and the fourth arm pulley 35 in the stated order, thus causing the arm 18 to pivot.

At this point, the first transmission gear 28, the second transmission gear 29, the second arm pulley 30, and the third arm pulley 33 are freely rotatable with respect to the first shaft 19 and the second shaft 20. Pivoting of the arm 18 therefore does not affect the boom 12. Further, although the pivoting direction of the arm 18 is opposite to the rotating direction of the first arm pulley 17, this presents no problem whatsoever for control.

On the other hand, for cases where the boom 12 is made to pivot with respect to the base 11, the boom motor 14 rotates the first boom pulley 16. Rotation of the first boom pulley 16 is transmitted to the boom pulley 41, the second boom pulley 40, the first boom gear 38, the second boom gear 39, and the second shaft 20 in the stated order, thus causing the boom 12 to rotate.

At this point, as the connecting guide device 27 is provided between the base 11 and the boom 12, motion of the boom 12 becomes a regulated motion due to the connecting guide device 27. That is, spacing between the first shaft 19 and the second shaft 20 is maintained by the connecting members 21 and 22, and the first guide gears 23 and 24 mesh with the second guide gears 25 and 26. The second boom gear 39 therefore moves in the periphery of the first boom gear 38 while meshing with the first boom gear 38 when the first boom gear 38 rotates.

For example, for cases where the first boom gear 38 is made to rotate in a counterclockwise direction in Fig. 1, the second boom gear 39 displaces so as to move in a clockwise direction in Fig. 1 around the periphery of the first boom gear 38, with the first shaft 19 as a center, while meshing with the first boom gear 38. For cases where the first boom gear 38 is made to rotate in a clockwise direction in Fig. 1, the second boom gear 39 displaces in the opposite direction.

At this point, the second guide gears 25 and 26 undergo planetary operation on the periphery of the first guide gears 23 and 24. The second guide gears 25 and 26, and the second boom gear 39 are fixed to the second shaft 20, and therefore the second shaft 20 revolves, with the first shaft 19 as a center, while rotating. The boom 12 pivots integrally with the second shaft 20.

Further, the first guide gears 23 and 24, and the first transmission gear 28 are provided coaxially with each other, and have the same diameter. The second guide gears 25 and 26, and the second transmission gear 29 are also provided coaxially with each other, and have the same diameter. Accordingly, the second transmission gear 29 displaces on the periphery of the first transmission gear 28 according to displacement of the second shaft 20, with the first shaft 19 as a center.

However, the first transmission gear 28 is freely rotatable with respect to the first shaft 19, and the second transmission gear 29 is freely rotatable with respect to the second shaft 20. The second transmission gear 29 therefore rotates when the first transmission gear 28 rotates, irrespective of whether or not the boom 12 pivots with respect to the base 11. Further, the second transmission gear 29 does not rotate with respect to the second shaft 20 and the boom 12 when the first transmission gear 28 does not rotate, irrespective of whether or not the boom 12 pivots with respect to the base 11.

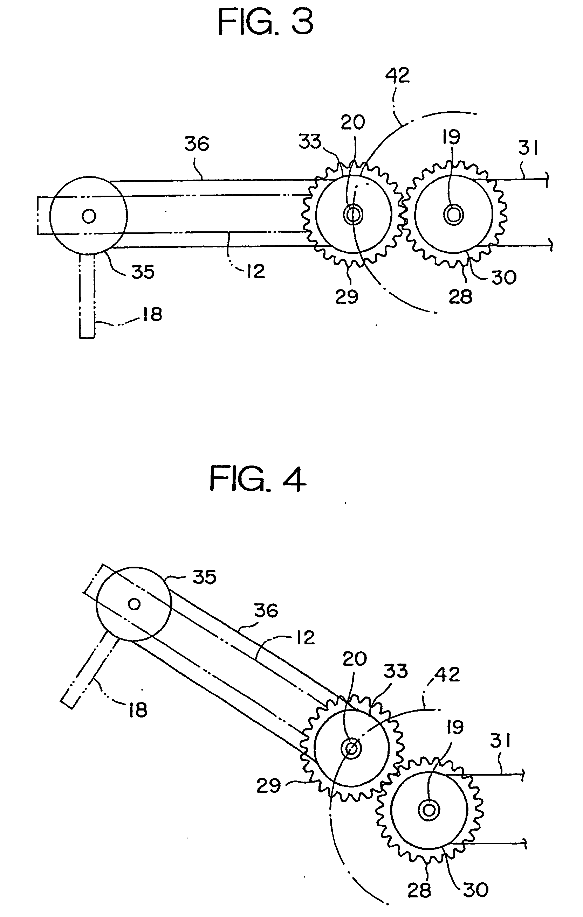

Fig. 3 is an explanatory diagram that shows a relationship between the first transmission gear 28 and the second transmission gear 29 of Fig. 2, and Fig. 4 is an explanatory diagram that shows a state in which the second shaft 20 of Fig. 3 has displaced with respect to the first shaft 19. As described above, when the boom motor 14 pivots the boom 12, the second shaft 20, which is fixed to the boom 12, displaces (revolves) along an arc 42 centered on the first shaft 19.

Accordingly, although the second transmission gear 29 displaces in the periphery of the first transmission gear 28, with the first shaft 1 as a center, the second transmission gear 29 does not rotate with respect to the second shaft 20 or the boom 12 as long as the first transmission gear 28 does not rotate. The arm 18 therefore does not pivot with respect to the boom 12 as long as the arm motor 15 is not driven, and the angle of the arm 18 with respect to the boom 12 does not change.

That is, rotation of the first arm pulley 17, which is the first rotating member, is transmitted to the arm 18, which is the second rotating member, by way of the first transmitting means 32, the first transmission gear 28, the second transmission gear 29, and the second transmitting means 37 in the stated order. Further, the second guide gears 25 and 26, and the second transmitting gear 29 undergo relative planetary operation with respect to the first guide gears 23 and 24, and the first transmission gear 28 when the rotary joint between the base 11 as the first link member and the boom 12 as the second link member rotates.

According to the rotation transmission device of Embodiment 1, rotation of the first arm pulley 17 that is mounted on the base 11 can thus be transmitted to the arm 18, which is mounted to the boom 12, without being affected by the pivoting of the boom 12 in the rotary joint between the base 11 and the boom 12. Moreover, the configuration of the rotation transmission device is simple.

Furthermore, the rotation angle of an output shaft of the boom motor 14 and the rotation angle of the second shaft 20 can be made to coincide with each other by setting the diameter of the second boom gear 39 to twice the diameter of the first boom gear 38. Control can thus be facilitated.

In addition, by setting the diameter of the first boom gear 38 and the diameter of the first guide gears 23 and 24 to different values, and by setting the diameter of the second boom gear 29 and the diameter of the second guide gears 25 and 26 to different values, the first boom gear 38 and the second boom gear 39 can be endowed with an action of preventing the boom 12 from becoming freely pivotable with respect to the base 11 when the boom motor 14 is not driven. In other words, a state where the boom 12 is stopped can be maintained without the necessity of using stopping torque of the boom motor 14.

A rotation transmission using two link members is explained in Embodiment 1 described above. The present invention can also be applied to a link assembly having n link members (where n is a natural number equal to or greater than 3) that are mutually rotatably connected. That is, rotation of a first rotating member provided to a first link member that is positioned in an end portion of the link assembly can be transmitted to a second rotating member that is provided to an n-th link member positioned in the other end portion of the link assembly, without being affected by intermediate rotary joints.

A plurality of rotary joints exist between the first rotating member and the second rotating member for cases where the link assembly possesses three or more link members. Basically, interference by the rotary joints can be eliminated by disposing a mechanism similar to that of Embodiment 1 in each of the plurality of rotary joints.

### Embodiment 2

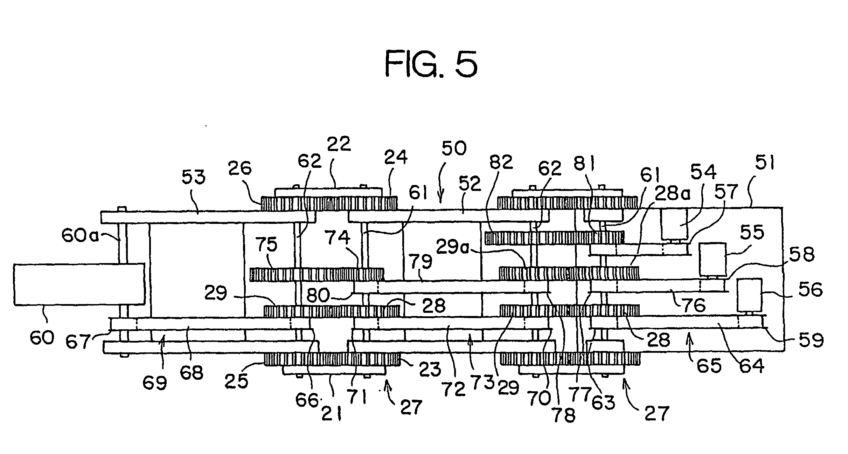

Application of the present invention to the most simple link assembly, which possesses n=3 link members, is explained in Embodiment 2. Fig. 5 is a plan view that shows a rotation transmission device according to Embodiment 2 of the present invention.

In the figure, a link assembly 50 has three link members that are mutually rotatably connected. That is, the link assembly 50 has a first link member 51 that is positioned in one end portion, a second link member 52 that is adjacent to the first link member 51, and a third link member 53 that is positioned in the other end portion.

A first motor 54, a second motor 55, and a third motor 56 are mounted to the first link member 51. A first pulley 57 is rotated by the first motor 54, and a second pulley 58 is rotated by the second motor 55. A third pulley 59, which is a first rotating member, is rotated by the third motor 56.

An arm 60 as a second rotating member is connected to a distal end portion of the third linkmember 53 so as to be integrally pivotable with an arm shaft 60a, with the arm shaft 60a as a center. Rotation of the third pulley 59 is transmitted to the arm 60 by the rotation transmission device according to Embodiment 2 of the present invention, without being affected by intermediate rotary joints.

First shafts 61 are provided in the link members 51 and 52 excluding the third link member 53. N-1 = 3-1 = 2 first shafts 61 are used in the link assembly 50.

Second shafts 62 are provided in the link members 52 and 53, excluding the first link member 51. Each of the second shafts 62 is adjacent to each of the first shafts 61, and extend in parallel with the adjacent first shaft 61. Further, n-1 = 3-1 = 2 second shafts 62 are used in the link assembly 50.

A connection guide device similar to that of Embodiment 1 is disposed between each of the adjacent link members 51 to 53. N-1 = 3-1 = 2 connection guide devices 27 are used in the link assembly 50. Further, each of the connection guide devices 27 has the pair of connecting members 21 and 22, the pair of first guide gears 23 and 24, and the pair of second guide gears 25 and 26.

A mechanism for driving the second link member 52 and the third link member 53, not only the arm 60, is included in the device of Embodiment 2. A mechanism for transmitting rotation to the arm 60 is explained first.

The first transmission gear 28 is provided to each of the first shafts 61. The first transmission gear 28 is freely rotatable with respect to the first shaft 61, with the first shaft 61 as a center. The first transmission gear 28 has the same diameter as that of the first guide gears 23 and 24 arranged coaxially therewith.

The second transmission gear 29 is provided to each of the second shafts 62. The second transmission gear29isfreely rotatable with respect to the second shaft 62, with the second shaft 62 as a center. The second transmission gear 29 has the same diameter as that of the second guide gears 25 and 26 arranged coaxially therewith, and meshes with the first transmission gear 29.

A fourth pulley 63, which rotates integrally with the first transmission gear 28 of the first link member 51, with the first shaft 61 as a center, is fixed to the first transmission gear 28. A loop-shaped first belt 64 is wound between the third pulley 59 and the fourth pulley 63. A first transmitting means 65 for transmitting rotation of the third pulley 59 to the first transmission gear 28 of the first link member 51 has the fourth pulley 63 and the first belt 64.

A fifth pulley 66, which rotates integrally with the first transmission gear 28 with the first shaft 61 as a center, is fixed to the second transmission gear 29 of the third link member 53. A sixth pulley 67, which rotates integrally with the arm 60 and the arm shaft 60a with the arm shaft 60a as a center, is fixed to the arm shaft 60a. A loop-shaped second belt 68 is wound between the fifth pulley 66 and the sixth pulley 67.

A second transmitting means 69 for transmitting rotation of the second transmission gear 29 of the third link member 50 to the arm 60 has the fifth pulley 66, the sixth pulley 67, and the second belt 68.

A seventh pulley 70, which rotates integrally with the second transmission gear 29 with the second shaft 62 as a center, is fixed to the second transmission gear 29 of the second link member 52. An eighth pulley 71, which rotates integrally with the first transmission gear 28 with the first shaft 61 as a center, is fixed to the first transmitting gear 28 of the second link member 52. A loop-shaped third belt 72 is wound between the seventh pulley 70 and the eighth pulley 71.

A third transmitting means 73 that transmits rotation of the second transmission gear 29 to the first transmission gear 28, which is provided to the same link member 52, has the seventh pulley 70, the eighth pulley 71, and the third belt 72. N-2 = 3-2 = 1 third transmitting means 73 is used in the link assembly 50.

Rotation of the third pulley 59, which is the first rotating member, is transmitted to the arm 60, which is the second rotating member, by way of the first transmitting means 65, the first transmission gear 28, the second transmission gear 29, the third transmitting means 73, the first transmission gear 28, the second transmission gear 29, and the second transmitting means 69 in the stated order. Further, the second guide gears 25 and 26, and the second transmitting gear 29 undergo relative planetary operation with respect to the first guide gears 23 and 24, and the first transmission gear 28 when the rotary joints among the mutually adjacent link members 51, 52, and 53 rotate.

A drive mechanism for the third link member 53 is explained next. A first transmission gear 28a used for transmitting rotation to the third link member 53 is provided to the first shaft 61 of the first link member 51. The first transmission gear 28a has the same diameter as that of the first guide gears 23 and 24. A second transmission gear 29a that meshes with the first transmission gear 28a is provided to the second shaft 62 of the second link member 52. The second transmission gear 29a has the same diameter as that of the second guide gears 25 and 26. Further, the first transmission gear 28a and the second transmission gear 29a are freely rotatable with respect to the first shaft 61 and the second shaft 62.

A freely rotatable first small-size gear 74 is provided to the first shaft 61 of the second link member 52. A first large-size gear 75 that meshes with the first small-size gear 74 is fixed to the second shaft 62 of the third link member 53. The first large-size gear 75 rotates integrally with the second shaft 62 and the third link member 53. Further, the diameter of the first gear 75 is set to twice the diameter of the first small-size gear 74.

Rotation of the second pulley 58 is transmitted to the first transmission gear 28a through a fourth belt 76 and a ninth pulley 77. Rotation of the second transmission gear 29a is transmitted to the first small-size gear 74 through a tenth pulley 78, a fifth belt 79, and an eleventh pulley 80.

A drive mechanism for the second link member 52 is explained next. A freely rotatable second small-size gear 81 is provided to the first shaft 61 of the first link member 51. A second large-size gear 82 that meshes with the second small-size gear 81 is fixed to the second shaft 62 of the second link member 52. The second large-size gear 82 rotates integrally with the second shaft 62 and the second link member 52. Further, the diameter of the second large-size gear 82 is set to twice the diameter of the second small-size gear 81.

In the rotation transmission device constructed as described above, a method of driving the second link member 52, the third link member 53, and the arm 60 is similar to that of Embodiment 1. The principle according to which interference due to the rotary joints is removed is also similar to that of Embodiment 1. It thus should be understood that interference due to the rotary joints can also be removed for cases in which the number of connected links has been increased.

It should be noted that, although combinations of pulleys and belts are shown as the first to third transmitting means in Embodiment 1 and Embodiment 2 described above, the present invention is not limited to combinations of pulleys and belts. Other configurations may also be used, provided that rotation can be transmitted. For example, combinations of chains and sprockets may also be used.

### Embodiment 3

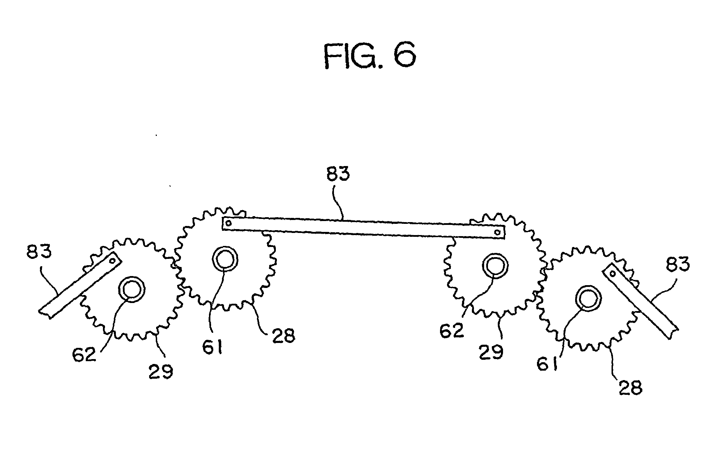

Further, transmission may also be performed by using link rods 83 like those shown in Fig. 6 for cases where the rotation angle range is limited. In Fig. 6, one end portion of each link rod 83 is pivotably connected to a location spaced apart from the center of the first transmission gear 28 in a radial direction. Further, the other end portion of each link rod 83 is pivotably connected to a location spaced apart from the center of the second transmission gear 29 in a radial direction. The link rods 83 therefore possess a parallel link function.

### Embodiment 4

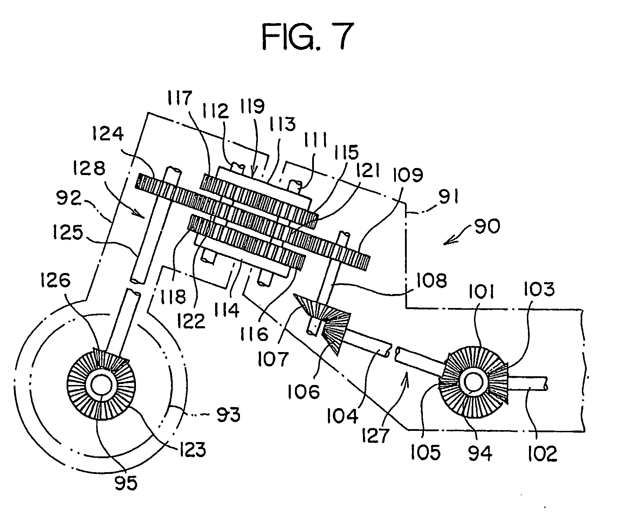

Next, Fig. 7 is a side view that shows a rotation transmission device according to Embodiment 4 of the present invention. Embodiment 4 is one in which the rotation transmission device of the present invention is applied to a two wheel (or three wheel) motorcycle. It should be noted that Fig. 7 is used for ease of explanation and ratios of component sizes and the like are not necessarily accurate.

The link assembly is a two wheel vehicle 90 in Embodiment 4. A first link member is a main assembly 91 that includes an engine, a transmission, a fuel tank, a seat, a back wheel, and the like. Further, a second link member that is rotatably connected to the first link member is a handle assembly 92 that includes a handlebar, a front fork, and the like. In addition, the first rotating member is a drive portion output shaft 94 that contains an engine main body, the transmission, and the like. The second rotating member is a rotation shaft of a front wheel 93, that is, a front wheel shaft 95, which is provided in the handle assembly 92.

In the figure, a first bevel gear 101 that rotates integrally with the output shaft 94 is fixed to the output shaft 94. A second bevel gear 103 that meshes with the first bevel gear 101 is fixed to an end portion of a rear shaft 102 for transmitting rotation of the output shaft 94 to a rear wheel (not shown). It should be noted that it is of course possible to perform transmission of a driving force to the rear wheel by using a chain or the like.

A third bevel gear 105 that meshes with the first bevel gear 101 is fixed to an end portion of a front wheel shaft 104. The front wheel shaft 104 is rotatable, with its axis as a center, and is housed within a pipe (not shown), for example. A fourth bevel gear 106 is fixed to the other end portion of the front wheel shaft 104.

Rotation of the fourth bevel gear 106 is transmitted to a rear side gear 109 through a fifth bevel gear 107 and a rear side rotary shaft 108. The rear side rotary shaft 108 is freely rotatably supported by the main assembly 91.

A first shaft 111 is fixed to the main assembly 91. A second shaft 112 that extends in parallel with respect to the first shaft 111 is fixed to the main assembly 92.

A pair of connecting members 113 and 114 that maintain a gap between the first shaft 111 and the second shaft 112 are connected between both end portions of the first shaft 111 and the second shaft 112. The connecting members 113 and 114 are rockable with respect to the assemblies 91 and 92, with the first shaft 111 and the second shaft 112 as centers.

A pair of first guide gears 115 and 116 that are coaxial with the first shaft 111 are fixed to the first shaft 111. A pair of second guide gears 117 and 118 that are coaxial with the second shaft 112 are fixed to the second shaft 112. The second guide gears 117 and 118 mesh with the first guide gears 115 and 116. A connecting guide device 119 has the pair of connecting members 113 and 114, the pair of first guide gears 115 and 116, and the pair of second guide gears 117 and 118.

The handle assembly 92 is connected to the main assembly 91 by the connecting guide device 119 as described above. The configuration and the action of the connecting guide device 119 are similar to those of the connecting guide device 27 of Embodiment 1. In Embodiment 4, the first guide gears 115 and 116, and the second guide gears 117 and 118 have the same diameter.

A first transmission gear 121, which is freely rotatable with respect to the first shaft with the first shaft 111 as a center, is provided to the first shaft 111. The first transmission gear 121 meshes with the rear wheel gear 109. Further, the first transmission gear 121 has the same diameter as that of the first guide gears 115 and 116.

A second transmission gear 122, which is freely rotatable with respect to the second shaft 112 with the second shaft 112 as a center, is provided to the second shaft 112. The second transmission gear 122 has the same diameter as that of the second guide gears 117 and 118, and meshes with the first transmission gear 121.

A sixth bevel gear 123 is fixed to the front wheel shaft 95, which rotates integrally with the front wheel 93. Rotation of the second transmission gear 122 is transmitted to the sixth bevel gear 123 through a front side gear 124, a front side rotary shaft (spline shaft) 125, and a seventh bevel gear 126. The front side rotary shaft 125 is freely rotatably supported by the handle assembly 92.

A first transmitting means 127 for transmitting rotation of the output shaft 94 to the first transmission gear 121 has the first bevel gear 101, the third bevel gear 105, the front wheel shaft 104, the fourth bevel gear 106, the fifth bevel gear 107, the rear side rotary shaft 108, and the rear side gear 109.

A second transmitting means 128 for transmitting rotation of the second transmission gear 122 to the front wheel shaft 95 has the front side gear 124, the front side rotary shaft 125, the seventh bevel gear 126, and the sixth bevel gear 123.

With this type of two wheel vehicle 90, rotation of the output shaft 94 is transmitted to the front wheel shaft 95 through the first transmitting means 127, the first transmission gear 121, the second transmission gear 122, and the second transmitting means 127. The front wheel 93 and the rear wheel can therefore be made to rotate at the same time by one engine.

Further, the second shaft 112, and the second guide gears 117 and 118 undergo planetary operation, with the first shaft 111 as a center, when a vehicle operator moves the handlebar during running of the vehicle, and the angle of the handle assembly 92 changes with respect to the main assembly 91. The first transmission gear 121 and the second transmission gear 122 are freely rotatable with respect to the first shaft 111 and the second shaft 112 at this point, and therefore are not affected by movement the handlebar. This action is similar to that of Embodiment 1.

According to the rotation transmission device of Embodiment 4, the front wheel 93 can thus be driven without receiving being affected (reaction force) by movement of handlebar. That is, the front wheel 93 can maintain smooth rotation, and it is also possible to smoothly move the handlebar, when operating the vehicle.

It should be noted that, although a two wheel drive two wheel vehicle is shown in Embodiment 4, driving of only the front wheel may also be performed. Further, the present invention can also be applied to an automobile to realize a front wheel drive (or a four wheel drive) automobile.

Furthermore, although a case of transmitting the driving force of the arm motor 15 to the arm 18 is shown in Embodiment 1, interference from the rotary joints can be eliminated according to the rotation transmission device of the present invention even when the rotation is transmitted in the opposite direction. That is, for cases where the arm motor 15 is replaced by a rotation sensor, and the arm 18 is operated, the amount of pivot of the arm 18 with respect to the boom 12 can be detected without being affected by the intermediate rotary joints. The present invention can therefore also be applied to a master side operation lever of a master slave control device, for example.

According to the present invention, rotation can be transmitted in the link assembly without being affected by the rotary joints, and control can be made simple, as described above. The rotation transmission device of the present invention can therefore be applied to fields of all types, such as operation devices and maneuvering devices of articulated robots used in various environments, medical equipment inserted into the interior of a patient and used for diagnosis and treatment, heavy machinery used for civil engineering work, and vehicles such as two wheel vehicles like those described above.

## Claims

1. A rotation transmission device provided in a link assembly having a first link member and a second link member that are mutually rotatably connected, the rotation transmission device transmitting rotation of a first rotating member provided in the first link member to a second rotating member provided in the second link member, the rotation transmission device comprising:
a first shaft provided in the first link member;
a second shaft provided in the first link member and extending in parallel with the first shaft;
a connecting guide device having: at least one connecting member which is connected between the first shaft and the second shaft and is rockable with respect to the first link member and the second link member with the first shaft and the second shaft as centers, the connecting member maintaining a spacing between the first shaft and the second shaft; at least one first guide gear which is disposed coaxially with the first shaft and fixed to the first link member; and at least one second guide gear disposed coaxially with the second shaft, the second guide gear being fixed to the second link member and meshing with the first guide gear;
a first transmission gear which is freely rotatable with respect to the first shaft, with the first shaft as a center, and has the same diameter as that of the first guide gear;
a second transmission gear which is freely rotatable with respect to the second shaft, with the second shaft as a center, has the same diameter as that of the second guide gear, and meshes with the first transmission gear;
a first transmitting means that is provided in the first link member, for transmitting the rotation of the first rotating member to the first transmission gear; and
a second transmitting means which is provided in the second link member, for transmitting rotation of the second transmission gear to the second rotating member.

2. A rotation transmission device according to claim 1, wherein the rotation of the first rotating member is transmitted to the second rotation member through the first transmitting means, the first transmission gear, the second transmission gear, and the second transmitting means in the stated order, and wherein when a rotary joint between the first linkmember and the second link member rotates, the second guide gear and the second transmission gear undergo relative planetary operation with respect to the first guide gear and the first transmission gear.

3. A rotation transmission device provided in a link assembly having n link members (where n is a natural number equal to or greater than 3) that are mutually rotatably connected, the rotation transmission device transmitting rotation of a first rotating member to a second rotating member, the first rotating member being provided in a first link member that is positioned in one end portion of the link assembly, the second rotating member being provided in an n-th link member that is positioned in the other end portion of the link assembly, the rotation transmission device comprising:
(n-1) first shafts, each of which is provided in each of the link members excluding the n-th link member;
(n-1) second shafts, each of which is provided in each of the link members excluding the first link member so as to be adjacent to each of the first shafts, the second shafts extending in parallel with the adjacent first shafts;
(n-1) connecting guide devices, each of the connecting guide devices being disposed between mutually adjacent link members and having: at least one connecting member which is connected between each of the first shafts and each of the second shafts that are mutually adjacent and is rockable with respect to each link member with each link member as a center, the connecting member maintaining a spacing between each first shaft and each second shaft that are mutually adjacent; at least one first guide gear which is disposed coaxially with each first shaft and is fixed to each link member; and at least one second guide gear disposed coaxially with each second shaft, the second guide gear being fixed to each link member and meshing with each first guide gear;
(n-1) first transmission gears which are freely rotatable with respect to the first shafts, with the first shafts as centers, and have the same diameter as that of the first guide gear arranged coaxially therewith;
(n-1) second transmission gears which are freely rotatable with respect to the second shafts, with the second shafts as centers, have the same diameter as that of the second guide gear arranged coaxially therewith, and mesh with the first transmission gears;
a first transmitting means which is provided in the first link member, for transmitting rotation of the first rotating member to the first transmission gear of the first link member;
a second transmitting means which is provided in the n-th link member, for transmitting rotation of the second transmission gear of the n-th link member to the second rotating member; and
(n-2) third transmitting means which are provided in each of the link members excluding the first link member and the n-th link member, for transmitting rotation of the second transmission gears to the first transmission gears provided in the same link members.

4. A rotation transmission device according to claim 3, wherein rotation of the first rotating member is transmitted to the second rotation member by the first transmitting means, the second transmitting means, the third transmitting means, the first transmission gears, and the second transmission gears, and wherein when a rotary joint between the link members that are adjacent to each other rotates, the second guide gear and the second transmission gears undergo relative planetary operation with respect to the first guide gear and the first transmission gears.

5. A rotation transmission device according to any one of claims 1 to 4, wherein each of the connecting guide devices has a pair of connecting members which are mutually parallel and attached to each first shaft and each second shaft at both sides of each first transmission gear and each second transmission gear.

6. A rotation transmission device according to any one of claims 1 to 5, wherein each of the connecting guide devices has a pair of first guide gears that are disposed spaced apart from each other in an axial direction of the first shafts, and a pair of second guide gears that are disposed spaced apart from each other in an axial direction of the second shafts, and wherein each first transmission gear is disposed between the pair of first guide gears and each second transmission gear is disposed between the pair of second guide gears.
